# EUROPÄISCHE PATENTSCHRIFT

(11) **EP 1 118 602 B1**
(45) Veröffentlichungstag und Bekanntmachung des Hinweises auf die Patenterteilung: **04.08.2004**
(21) Anmeldenummer: 01100699.6
(22) Anmeldetag: 12.01.2001
(51) Int. Cl.: C05D 9/00, B01D 53/84

(54) **Nährlösungskonzentrat, insbesondere zur Verwendung in biologischen Tropfkörper-Filteranlagen**
Nutrient concentrate, especially for biological trickling filters
Solution nutritive concentrée, en particulier pour des filtres à lit biologiques

(30) Priorität: 21.01.2000 DE 10002476
(43) Veröffentlichungstag der Anmeldung: 25.07.2001
(73) Patentinhaber: M+W Zander Facility Engineering GmbH, 91080 Spardorf (DE)
(72) Erfinder: Kellner, Clarissa, 91355 Hilpoltstein (DE)
(74) Vertreter: Hübner, Gerd, Dipl.-Phys.

(56) Entgegenhaltungen:
- EP-A- 0 617 008
- GB-A- 1 108 164
- H.H.J. COX ET AL.: BIOTECHNOLOGY AND BIOENGINEERING, Bd. 62, Nr. 2, 20. Januar 1999 (1999-01-20), Seiten 216-224, XP000805716 New York, US

## Beschreibung

Die Erfindung betrifft ein Nährlösungskonzentrat, insbesondere zur Verwendung in biologischen Tropfkörper-Filteranlagen.

Die Erfindung betrifft das Gebiet der Abluftreinigung und insbesondere die Reinigung von Lösemittel-belasteter Luft mit Biofiltern und Biotropfkörpern.

Biologische Abluftreinigungsanlagen haben sich bereits vielfach zur Beseitigung von geruchsintensiven Emissionen in der Nahrungsmittelindustrie, Tierkörperverwertungsanlagen, Kläranlagen und Gießereien bewährt. Eine beträchtliche Erweiterung des Einsatzbereiches dieser Anlagen auf Siebdruckereien, Lackierereien und andere Lösemittel emittierende Betriebe wurden durch Einsatz von anderen Filtermaterialien und einer besseren Regelung möglich.

Das Funktionsprinzip von Biofiltern beruht auf dem biologischen Abbau der mit der Abluft zugeführten Lösemittel durch Mikroorganismen. Das gleiche Prinzip macht man sich in Kläranlagen zur Abwasserreinigung mit einer biologischen Belebungsstufe seit langem zu Nutzen.

Beim Biofilter lebt auf einer Schüttung eines organischen Trägermaterials, z. B. ankompostierter Baumrinde, Torf, Heidekraut oder Müllkompost eine Vielzahl von Mikroorganismen. Es handelt sich dabei um Bakterien und Pilze, die natürlicherweise im Boden vorkommen und nicht pathogen sind. Die Mikroorganismen bilden auf dem Filtermaterial einen sogenannten Biofilm, der aus den Mikroorganismen selbst und von Ihnen abgegebenen extrapolimeren Substanzen besteht. Der Wassergehalt im Biofilm ist sehr hoch. Ferner ist der Biofilm zusätzlich von einem Wasserfilm umgeben.

Ein Teil dieser darin immobilisierten Mikroorganismen ist in der Lage, nicht nur das organische Trägermaterial, sondern auch Kohlenwasserstoffe, wie z. B. Lösemittel unter Aufnahme von Sauerstoff zu Kohlendioxid und Wasser abzubauen und die bei dieser Reaktion freiwerdende Energie zu nutzen. Dadurch wird ein mit Lösemitteln belasteter Abluftstrom beim Durchtritt durch das Filtermaterial gereinigt. Als Abbauprodukte entstehen die unschädlichen Verbindungen CO₂ und H₂O.

Dieses Verfahren ist äußerst umweltfreundlich, da keine Problemverlagerung durch Entstehung anderer Verbindungen stattfindet (sogenannte Sekundäremissionen, z. B. durch Stickoxide und Kohlenmonoxid).

Essentiell wichtig für Biofilter ist die Befeuchtung des Rohgases bis auf nahezu Wasserdampfsättigung. Andernfalls wird dem Kompostmaterial Wasser entzogen, so daß es nach einer Zeit austrocknet und der biologische Abbau der Kohlenwasserstoffe zum Erliegen kommt.

Bei einem Biotropfkörper, wie er in biologischen Topfkörper-Filteranlagen. zum Einsatz kommt, wird statt eines organischen Trägermaterials ein Füllkörper aus nicht abbaubarem Kunststoff eingesetzt. Bewährt hat sich vor allem ein offenporiger Schaumstoff auf Polyurethanbasis. Dieser Füllkörper dient den Mikroorganismen als Siedlungsfläche. Die Nährstoffversorgung, die beim Biofilter durch das Vorhandensein aller benötigten Nährstoffe im organischen Material gewährleistet wird, wird beim Biotropfkörper durch eine spezielle Nährlösung übernommen, mit der das Filtermaterial diskontinuierlich beregnet wird. Die Bauform des Biotropfkörpers hat sich gegenüber dem Biofilter ebenfalls stark geändert. Es wird ein geschlossener Behälter aus VA-Stahl oder Kunststoff mit relativ hoher Bauform und einer Bodenwanne für die Beregnungsflüssigkeit verwendet. Hinzu kommen eine Pumpe für die Berieselung des Filtermaterials mit der als Nährlösung dienenden Beregnungsflüssigkeit, eine automatische pH-Regulation und Dosierpumpen für Zufuhr frischer Nährlösung. Die gleichmäßige Berieselung des Filters mit Nährlösung erfolgt über Pralldüsen.

Beim Einfahren wird die Anlage mit Mikroorganismen, die für den Abbau der Abluftinhaltstoffe geeignet sind, angeimpft. Innerhalb weniger Wochen bildet sich ein biologischer Rasen auf den Füllkörpern aus, der dann als biologischer Filter die Reinigung der Abluft bewerkstelligt.

Die Nährlösung enthält in der Regel Komponenten zur Stoffwechselversorgung der Mikroorganismen, wozu in erster Linie Ammonium-, Kalium-, Phosphat-, Magnesium-, Sulfat- und Eisen-Verbindungen gehören. Als Beispiel sind Ammoniumchlorid, hydratisiertes Kaliumphosphat und Magnesiumsulfat zu nennen.

Aus Gründen eines rationellen Transports vom industriellen Herstellungsort der Nährlösung zur Filteranlage und zur Vermeidung unnötigen Lageraufwandes wird die Nährlösung in aller Regel als Konzentrat hergestellt, transportiert und vor Ort gelagert. Zu ihrer Verwendung wird sie verdünnt.

Problematisch bei der Aufkonzentration ist die Eisenkomponente der Nährlösung. Bei Überschreiten einer bestimmten Konzentration fällt das Eisen aus und liegt in elementarer Form in der konzentrierten Lösung vor. Damit ist es für den Stoffwechselkreislauf der Mikroorganismen nicht mehr verfügbar.

Aus der EP-A-0 617 008 sind Eisen-Chelat-Lösungen bekannt, die zur Zuführung von Eisen zu Nährlösungen für die erdbodenfreie Pflanzenzucht verwendet werden.

Der Fachaufsatz "Biomass Control in Waste Air Biotrickling Filters by Protozoan Predation" von H.H.J. Cox at al aus "BIOTECHNOLOGY AND BIOENGINEERING", Band 62, Nr. 2, 20.01.1999, Seiten 216 bis 224 offenbart eine vielkomponentige Lösung für Biotropffilteranlagen, bei der ein EDTA-Komplex zur Verwendung kommt. Es handelt sich dabei um ein EDTA-Na₄ (H₂O)₂. Ferner offenbart diese Druckschrift die Verwendung von hydratisiertem Kaliumphosphat und Magnesiumsulfat, nicht aber von Ammoniumchlorid in der Nährlösung.

Der Erfindung liegt die Aufgabe zugrunde, ein Nährlösungskonzentrat anzugeben, das hochkonzentrierbar ist, ohne daß die Eisenkomponente im konzentrierten Zustand ausfällt.

Diese Aufgabe wird durch die im Anspruch 1 angegebene Zusammensetzung gelöst. Demnach ist als wesentlicher Bestandteil die Eisenkomponente als Eisen-EDTA-Komplex in der Nährlösung enthalten. Dadurch wird ein Ausfällen der Eisen-Komponente wirkungsvoll vermieden. Die Nährlösung kann so stark aufkonzentriert werden, daß sie anschließend in einem Verhältnis 1:1000 verdünnbar ist, trotzdem aber jedoch noch ausreichende Nährstoffeigenschaften aufweist. Ferner weist das erfindungsgemäße Nährlösungskonzentrat aufgrund seiner Zusammensetzung hohe Standzeit auf, ist also über einen langen Zeitraum haltbar und stabil.

In den Unteransprüchen sind bevorzugte Ausführungsformen des erfindungsgemäßen Nährlösungskonzentrats angegeben.

Im folgenden wir die Erfindung in einem Ausführungsbeispiel anhand der beigefügten Zeichnung näher erläutert. Diese

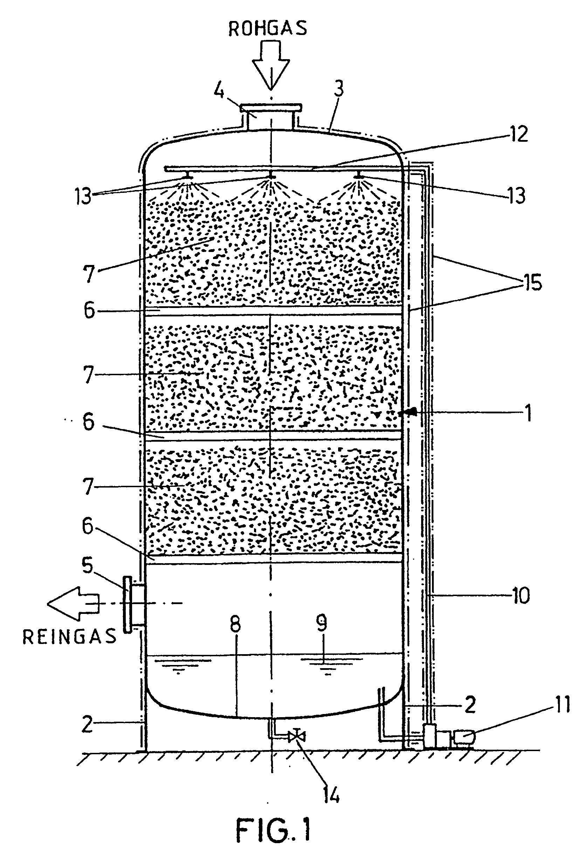

**Fig. 1** zeigt eine Tropfkörper-Filteranlage.

Wie aus Fig. 1 deutlich wird, ist die Tropfkörper-Filteranlage in einem ca. 10 m hohen, zylindrischen Tankbehälter 1 untergebracht, der auf Standfüßen 2 aufrecht steht. Zentral in seine Deckwand 3 mündet ein Rohgas-Zufuhrstutzen 4, über den beispielsweise die mit Lösemitteldämpfen belastete Abluft eines Druckereigebäudes in den Tankbehälter 1 eingeblasen werden kann. Im unteren Drittel des Tankbehälters 1 mündet seitlich ein Reingas-Abfuhrstutzen 5 aus, über den die gereinigte Abluft weggeführt wird.

Im Inneren des Tankbehälters 1 sind drei als Auflageböden dienende, übereinander angeordnete Tragroste 6 angeordnet, auf denen jeweils ein Füllkörper 7 aus nicht-abbaubaren, offenporigen Schaumstoff auf Polyurethanbasis sitzt. In den Poren dieser Füllkörper 7 ist ein "biologischer Rasen" angesiedelt, der Mikroorganismen zum Abbau der im Rohgas enthaltenen organischen Schadstoffe beinhaltet. Zur Ernährung dieser Mikroorganismen ist eine Nährlösung vorgesehen, die am Boden 8 des Tankbehälters 1 unterhalb des Abfuhrstutzens 5 in einem Nährlösungssumpf 9 bevorratet ist. Eine externe Versorgungsleitung 10 führt über eine Pumpe 11 von diesem Nährlösungssumpf 9 zur Deckwand des Tankbehälters 1 hin, wo sie in eine den Innenraum des Tankbehälters 1 in Querrichtung durchmessende Düsenlanze 12 mündet. An dieser sind Sprühdüsen 13 zum Ausbringen von Nährlösung auf die Füllkörper 7 angeordnet.

Da sich mit der Zeit im Nährlösungssumpf 9 ein Bodensatz bildet, ist am tiefsten Punkt des Bodens 8 des Tankbehälters 1 ein Abzugsventil 14 vorgesehen.

Es bleibt in anlagentechnischer Hinsicht zu ergänzen, daß in Fig. 1 strichpunktiert eine Isolierung 15 des Tankbehälters 1 und der Versorgungsleitung 10 angedeutet ist.

Die den Nährlösungssumpf 9 bildende Nährlösung ist auf der Basis eines Nährlösungskonzentrats der folgenden Zusammensetzung hergestellt:
- Ammoniumchlorid 20 - 200 g/l
- Kaliumdihydrogenphosphat-3-hydrat 30 - 70 g/l
- Magnesiumsulfat-3-hydrat 10 - 30 g/l
- Fe(III)-EDTA-Komplex 3 - 8 g/l
   und
   Spurenelemente.

Dieses Nährlösungskonzentrat wird vor dem Einsatz im Tankbehälter 1 im Verhältnis von 1:1000 mit Wasser verdünnt.

## Patentansprüche

1. Nährlösungskonzentrat zur Verwendung in biologischen Tropfkörper-Filteranlagen nach Verdünnung, **gekennzeichnet durch** folgende Bestandteile in Wasser:
- Ammoniumchlorid, hydratisiertes Kaliumphosphat und hydratisiertes Magnesiumsulfat sowie
- ein Eisen-EDTA-Komplex. und
- Spurenelemente.

2. Nährlösungskonzentrat nach Anspruch 1, **dadurch gekennzeichnet, daß** das hydratisierte Kaliumphosphat ein Kaliumdihydrogenphosphat-3-hydrat ist.

3. Nährlösungskonzentrat nach Anspruch 1 oder 2, **dadurch gekennzeichnet, daß** das hydratisierte Magnesiumsulfat ein Magnesiumsulfat-3-hydrat ist.

4. Nährlösungskonzentrat nach einem der Ansprüche 1 bis 3, **dadurch gekennzeichnet, daß** der Eisen-EDTA-Komplex ein Fe(III)-EDTA-Komplex ist.

5. Nährlösungskonzentrat nach einem der Ansprüche 1 bis 4, **dadurch gekennzeichnet, daß** dem Konzentrat Spurenelemente zugesetzt sind.

6. Nährlösungskonzentrat nach den Ansprüchen 1 bis 5, **gekennzeichnet durch** folgende Zusammensetzung:
- Ammoniumchlorid 20 - 200 g/l
- Kaliumdihydrogenphosphat-3-hydrat 30 - 70 g/l
- Magnesiumsulfat-3-hydrat 10 - 30 g/l
- Fe(III)-EDTA-Komplex 3- 8 g/l
und
- Spurenelemente.

## Claims

1. Nutrient solution concentrate for use in biological percolating filters after dilution, **characterized by** the following components in water:
- ammonium chloride, hydrated potassium phosphate and hydrated magnesium sulfate as well as
- an iron EDTA complex and
- trace elements.

2. Nutrient solution concentrate according to claim 1, **characterized in that** the hydrated potassium phosphate is a potassium dihydrogen phosphate-3-hydrate.

3. Nutrient solution concentrate according to claim 1 or 2, **characterized in that** the hydrated magnesium sulfate is a magnesium sulfate-3-hydrate.

4. Nutrient solution concentrate according to one of claims 1 to 3, **characterized in that** the iron EDTA complex is a Fe III) EDTA complex.

5. Nutrient solution concentrate according to one of claims 1 to 4, **characterized in that** trace elements are added to the concentrate.

6. Nutrient solution concentrate according to claims 1 to 5, **characterized by** the following composition:
- ammonium chloride 20 - 200 g/l
- potassium dihydrogen phosphate-3-hydrate 30 - 70 g/l
- magnesium sulfate-3-hydrate 10 - 30 g/l
- Fe(III) EDTA complex 3 - 8 g/l
and
- trace elements.

## Revendications

1. Solution nutritive concentrée destinée à être utilisée dans des dispositifs de filtres à lit biologiques après dilution, **caractérisée par** les composants suivants dans de l'eau :
- du chlorure d'ammonium, phosphate de potassium hydraté et sulfate de magnésium hydraté et
- un complexe de fer/EDTA et
- des éléments acides.

2. Solution nutritive concentrée selon la revendication 1, **caractérisée en ce que** le phosphate de potassium hydraté est un dihydrogénophosphate de potassium 3-hydraté.

3. Solution nutritive concentrée selon la revendication 1 ou 2, **caractérisée en ce que** le sulfate de magnésium hydraté est un sulfate de magnésium 3-hydraté.

4. Solution nutritive concentrée selon l'une quelconque des revendications 1 à 3, **caractérisée en ce que** le complexe de fer/EDTA est un complexe de Fe(III)/EDTA.

5. Solution nutritive concentrée selon l'une quelconque des revendications 1 à 4, **caractérisée en ce que** l'on ajoute des éléments traces au concentré.

6. Solution nutritive concentrée selon les revendications 1 à 5, **caractérisée par** la composition suivante :
- chlorure d'ammonium 20 à 200 g/l
- dihydrogénophosphate de potassium 3-hydraté 30 à 70 g/l
- sulfate de magnésium 3-hydraté 10 à 30 g/l
- complexe de Fe(III)/EDTA 3 à 8 g/l
et
- éléments traces.
